# EUROPEAN PATENT APPLICATION

(11) **EP 3 588 925 A1**
(43) Date of publication of application: **01.01.2020**
(21) Application number: 18305844.5
(22) Date of filing: 29.06.2018
(51) Int. Cl.: H04M 3/42, H04M 3/58, H04W 4/16

(54) **METHOD FOR SWITCHING A COMMUNICATION LINK AND SYSTEM AND DEVICE FOR IMPLEMENTING THIS METHOD**

(71) Applicant: Nagravision S.A., 1033 Cheseaux-sur-Lausanne (CH)
(72) Inventor: WENDLING, Bertrand, 1033 Cheseaux-sur-Lausanne (CH)
(74) Representative: Hoyng Rokh Monegier LLP

(57) **Abstract**

The present invention relates to a device, system and a method for switching a communication link (15) of an ongoing communication with a communication device (30), from a first terminal (10) to a second terminal (20). The method comprises:
- exchanging, between the first terminal and the second terminal, information (26) via a short-range connection (25) separate from said communication link (15), said information allowing to identify said ongoing communication,
- sending a routing request (5) from at least one of said first and second terminals (10, 20) to the communication device (30), said routing request (5) comprising data to identify the second terminal (20) or data to identify said ongoing communication,
- processing said routing request at said communication device, and
- in case of successful processing, switching said communication link (15) with said communication device (30) from the first terminal (10) to the second terminal (20).

## Description

### INTRODUCTION

The present disclosure relates to the field of telecommunications, since it may be applied to the transmission of signals, messages, words, writings, images, sounds or data of any nature using electronic and/or computing communication means. The present disclosure is preferably applicable in the field of telephony, in particular digital telephony.

### BACKGROUND

With mobiles phones, nowadays almost everyone can be reached at any time. On the other hand, there are still a lot of desk phones in use both in private and business areas. Desk phones relate to any phone having a wire connection to a communication network. Such wire connection is typically located on the base unit of the phone. The handset may be linked to the base unit, either using a wire, or wirelessly such as cordless phones known through the acronym DECT (Digital Enhanced Cordless Telecommunications). Desk phones are primarily devoted to be connected to a wire communication network, whereas mobile phones are designated to be connected to wireless communication network.

Desk phones with corded handset remain in use for several reasons, in particular because they do not need to be recharged since they do not have battery, they may provide better comfort such as sound quality, access to the keypad and display, and they do not depend on disturbances that may affect any signal of a mobile network.

In some cases, the two types of phone (desk and mobile phones) may be used successively during a conversation. However, current solutions are not optimal. For example, a person who is currently talking with an interlocutor using a desk phone have to end the call if, for any reason, this person must leave the place where the desk phone is located. It should be convenient to continue the conversation using the mobile phone of such a person. However, in order to do this, the person has to communicate his mobile phone number to his interlocutor, who must then call back on his mobile phone.

Such a way is burdensome, for both parties. Furthermore, depending on who is the interlocutor, the owner of the mobile phone may not want to transmit his mobile phone number, especially if it is a private phone number.

Accordingly, there is a need in providing a solution able to efficiently overcome at least a part of these drawbacks or deficiencies of the prior art.

### SUMMARY OF THE PRESENT SOLUTION

To address the above-mentioned concern, the present disclosure proposes a solution for switching a communication link of an ongoing communication with a communication device, from a first terminal to a second terminal. The first and second terminals may be regarded as any device located at one end of a communication network. The aforementioned *communication device* can be regarded either as a terminal or as one or several communication nodes of any kind, such as a server, a base unit or a central of a telecommunication operator, suitable to switch a communication link.

As non-limitative example, the description of the present solution will be mainly focused on telephone communications. However, it is emphasized that such a solution may be applied to any kind of telecommunications and is therefore no limited to the field of telephony.

Referring to the practical case mentioned above as first example, the first terminal may be regarded as the desk phone and the second terminal as the mobile phone of a first interlocutor of an ongoing communication. The so-called communication device may be regarded, for example, as a network operator's exchange (e.g. a telephone exchange), as at least one server or router within a communication network, or as a third terminal belonging to a second interlocutor of the ongoing communication (e.g. in case of VoIP through the Internet).

The communication link to be switched by the communication device may be regarded as the path which firstly connects the communication device to the first terminal, and then which will connect the communication device to the second terminal after switching. One or several intermediate devices or entities may be located on the communication link, i.e. between the communication device and the first or the second terminal.

The so-called *ongoing communication* should be considered as the main technical means currently underway (i.e. currently in use, in progress or activated) to exchange data (signals, messages, sounds, images, etc) from one interlocutor to another and vice versa. It should be noted that devices may also replace the aforementioned interlocutors. Therefore, in its technical sense, the ongoing communication does not only comprise the communication link, but also comprises the devices located at the two ends of this communication link, namely the communication device and the first or second terminal.

According to a first aspect, the method of the present solution comprises the following steps:
- exchanging, between the first terminal and the second terminal, information via a short-range connection separate from the communication link; the aforementioned information aiming to identify the ongoing communication;
- sending a routing request from at least one of the first and second terminals to the communication device; the aforementioned routing request comprising data to identify the second terminal or data to identify the ongoing communication, depending on whether the routing request is sent respectively by the first terminal or by the second terminal;
- processing the routing request at the communication device; and
- in case of successful processing, switching the communication link, established with the communication device, from the first terminal to the second terminal.

Still referring to the practical case mentioned above, instead of having to provide his mobile phone number to his interlocutor and to end and resume the call manually, the present solution allows the owner of the mobile phone to easily handover the call from the desk phone to the mobile phone without ending the call.

To this end and according to one embodiment based on NFC (Near Field Communication) technology, the person may simply put his mobile phone in close proximity to the desk phone as an order to handover the communication in progress from the desk phone to his mobile phone while thus providing or exchanging all the data required for this purpose. Once the communication device has received, from the desk phone, the required data to reach the mobile phone, the communication device may send a call signal to the mobile phone. The person merely needs to answer to the incoming call on his mobile phone, in order to continue the ongoing conversation using his mobile phone. Once the mobile phone is able to receive and send data with the communication device (i.e. once the mobile phone is picked up) the communication link initially established between the communication device and the desk phone can be regarded as been switched. Such switching is preferably performed by the communication device so as to obtain a communication now established between the communication device and the mobile phone. Accordingly, the desk phone can be hung up and used for new calls.

Other embodiments of the solution disclosed so far, will be presented in the detailed description that will follow.

It should also be noted that the present solution is not limited to a method, but also refers to a communication system configured to allow switching a communication link according to any embodiment of the method, and further refers to a terminal configured to be used for switching such a communication link. Other advantages and embodiments will also be disclosed in the detailed description.

### BRIEF DESCRIPTION OF THE DRAWING

The solution and the embodiments suggested in the present disclosure should be taken as non-limitative examples and will be better understood with reference to the attached figures in which:
Fig. 1 schematically depicts an overview of a first example of a communication architecture suitable to implement the method.
Fig. 2 and 3 schematically depict a variants of the communication architecture of Fig. 1.

### DETAILED DESCRIPTION

The following description refers both to a method, a system and a device. Although these three subject-matters will be presented one after the other, it should be understood that any features disclosed in connection with the method may be applied, if any, to the system and device for implementing this method and vice-versa.

### Overview the method

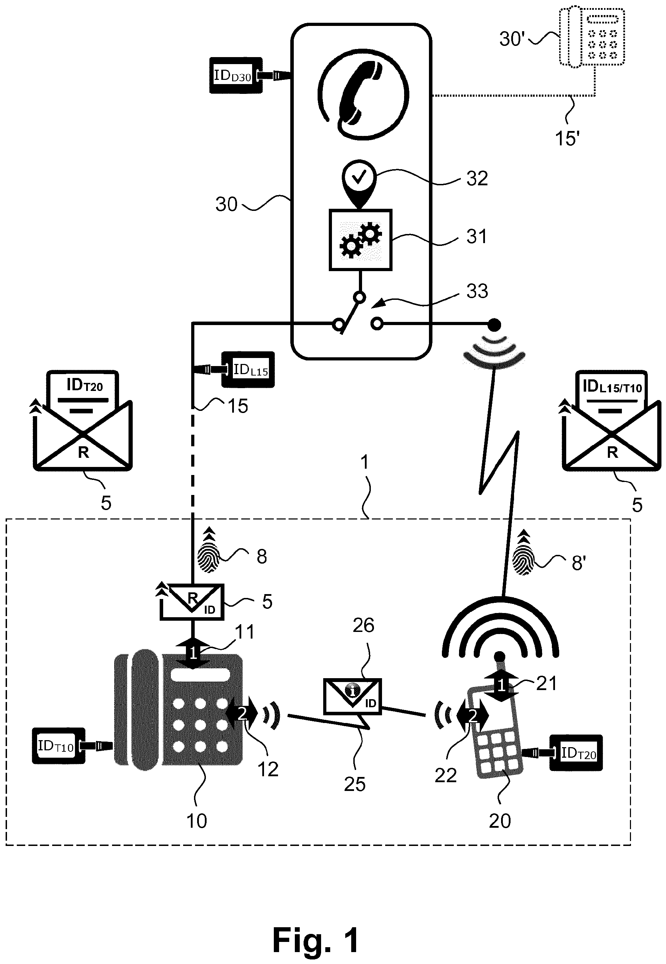

Fig. 1 schematically depicts an overview of communication architecture suitable for the implementation of the method, more specifically adapted to several embodiments of the method.

Two main areas are shown in this Figure. The first main area is depicted by the rectangle drawn in dashed line and corresponds to the end-user area 1. This area should be regarded as being the business or home area of the end-user and may be defined as a local area. Such a local area may be limited to a business office, premises or a flat for example. The second main area comprises everything that is not included in the end-user area and thus corresponds to an extended zone located outside the end-user area.

Three main entities are shown in Fig.1. The first two main entities are a first terminal 10 and a second terminal 20, both located within the end-user area 1, and the third main entity is a communication device 30 located outside the end-user area 1.

According to a first scenario, the first terminal 10 is a desk phone, namely a phone which is not designed to be taken away from the end-user area 1 due to its wire connection. The second terminal 20 is a mobile phone, namely a phone that can be connected to a wireless communication network of a telecommunication provider.

According to another scenario, the first terminal 10 may be a mobile phone and the second terminal 20 may by a desk phone.

In a further scenario, one of the first and second terminals 10, 20 may be a mobile phone designed to be mainly used in the end-user area (e.g. a DECT or the business mobile phone) and the other terminal may be mainly designed to be used outside the end-user area 1, e.g. as private mobile phone of the end-user.

In the following description, the present solution will be mainly based on the first scenario, as shown in the attached Figures.

The communication device 30 may be the communication or service provider to which the first terminal 10 is assigned, preferably assigned most of the time. The communication device 30 may be a server or a router located at the service provider or elsewhere outside the end-user area 1. The communication device 30 may be also a group of servers, routers or device located outside the end-user area. According to another embodiment, the communication device 30 may be a third terminal, preferably the terminal of another end-user with which the first end-user of the end-user area is in communication. In all cases, the communication device 30 can be regarded as a remote communication device with respect to the terminals 10, 20.

To better explain the main goal and utility of the present solution, one will consider the situation where an end-user is at work, namely within the end-user area 1, and is currently talking on the phone with another end-user which uses a third terminal 30'. The first and third terminals 10, 30' are connected each other through the communication device 30. In this case, the communication device 30 can be regarded as being the service or network provider of these terminals 10, 30', namely an intermediate entity such as switching center or a main distribution frame, located within a communication network and allowing most terminals to communicate with each other. Accordingly, a communication link 15 is used to connect the first terminal 10 to the communication device 30, and a similar communication link 15' may be used to connect the third terminal 30' to the communication device 30.

It should be noted that the third terminal 30' as well as the aforementioned similar communication link 15' are drawn in dotted line in Fig. 1, since they do not play any role in this embodiment, but merely facilitate the understanding of communication architecture. Indeed, according to the present solution, the switching of the communication link 15, from the first terminal 10 to the second terminal 20, will be operated by the communication device 30. Therefore the third terminal 30' as well as its communication link 15' to the communication device 30 have no real importance because they are located in the background with respect to the communication device 30 acting as switching device. For this reason, it is of little importance to consider the third terminal 30', or several third terminals 30' that might be simultaneously connected, e.g. in case of conference call.

In Fig. 1, the communication link 15 represents the active communication line that is currently used in the ongoing communication with the communication device 30. From a technical point of view, at this stage the ongoing communication is the communication in progress, initially established between the first terminal 10 and the communication device 30. Accordingly, the ongoing communication encompasses the first terminal 10, the communication link 15 and the communication device 30, because at least each of these elements are involved for sending and receiving data (in this case data relating to a voice conversation) from the first terminal 10 to the communication device 30 and vice versa.

One of the purposes of the present solution is to switch, for example upon request of the end-user located within the end-user area 1, the communication link 15 established with the communication device 30, from the first terminal 10 to the second terminal 20. Once the ongoing communication link 15 has been switched, the conversation can be continued using the second terminal 20 instead of the first terminal 10.

To perform such switching, the method of the present solution comprises the following steps:
The first step aims to exchange, between the first terminal 10 and the second terminal 20, information 26 via a short-range connection 25 separate from the communication link 15. Preferably, this step aims to directly exchange the aforementioned information between these two terminals, namely without any intermediate device. The aforementioned information 26 may refer to technical information (e.g. current call or communication details) relating to the ongoing communication. Typically, such information refers to any data suitable to identify the communication in progress. For example, information 26 may refer to at least one of the identifier ID_{T10} of the first terminal 10, the identifier ID_{D30} of the communication device 30 and the identifier ID_{L15} of the communication link 15 used for the ongoing communication.

The identifier of any terminal or communication device may be a telephone number, a network address of the terminal or of the termination point to which the terminal is connected, a SIM card number such as the IMSI (International Mobile Subscriber Identity) if the terminal is a mobile phone, or any data or combination of data that can be at least used for identification purposes. The identifier ID_{T30} of the communication device 30 may be the IP address of the communication device 30, especially if the latter is a server or a service provider such as a telecommunication operator for example.

In addition, it should be noted that, according to the present description, any identifier may be regarded as including data allowing retrieve the path for reaching the terminal or device identified by this identifier. Considering for example an IP address assigned to a specific device, such an IP address may not only used to route data packet to the appropriate device, but it may also be used to identify the aforementioned specific device, especially if the IP address is unique, which means that there is a single device for such an IP address. On the other hand, one may also consider that an identifier, such as a telephone number for example, is usually unique and can be regarded as a sufficient data to reach the appropriate device or terminal assigned to such an identifier. Alternatively, it should be also noted that any of identifier of the present description may be accompanied or replaced by an address (e.g. a network address) enabling any sender to reach the appropriate device or terminal identified by the related or relevant identifier. This is applicable at any time and to any identifier mentioned in the present description.

The short-range connection 25 is fully distinct from the communication link 15 and can be regarded as a local connection designed to link, preferably to directly link, the first and the second terminals 10, 20 to each other. The short-range connection 25 has no connection with the communication link 15 and comprises neither any portion of such a link nor any portion of a communication line designed to go outside the end-user area 1. Although the short-range connection may be a wired connection, preferably it will be a wireless connection. The range of the short-range connection 25 is not designed to extend beyond the end-user area 1 because, for the present solution, this connection has no utility outside the end-user area 1. For example, the short-range connection may be provided by any technology, such as WiFi, bluetooth, NFC or by using Infrared waves or any suitable support for carrying data or signals.

As shown in Fig. 1, each of the first and second terminals 10, 20, comprises a first communication interface 11, 21 configured to be connected to the communication link 15, and a second communication interface 12, 22 configured to link the first and second terminals 10, 20 to each other through the short-range connection 25.

The next step of the present method aims to send at least one routing request 5, from at least one of the first and second terminals 10, 20, to the communication device 30. The routing request is schematically illustrated in Fig. 1 by an envelope to be sent towards the communication device 30, preferably through the communication link 15. The routing request 5 comprises at least data to identify the second terminal 20 or at least data to identify the ongoing communication, depending on whether the routing request is sent respectively by the first terminal 10 or by the second terminal 20. In Fig. 1, the content of each of these routing requests is schematically illustrated by an enlarged opened envelope, showing its content, namely the identifier ID_{T20} in the envelope sent from the first terminal 10, and the identifier ID_{L15} or ID_{T10} in the envelope sent from the second terminal 20. Additional identifiers or information might be comprised in the routing request 5. Preferably, a single routing request 5 is sent either from the first or second terminal. However, in another embodiment, each of the first and second terminals 10, 20 might sent its own routing request 5 to the communication device 30.

Once the routing request 5 is received by the communication device 30, it is processed by this device. The processing stage is schematically depicted in Fig. 1 by the processing unit 31. During the processing of the routing request, the communication device 30 is able perform several tasks using the data provided by the routing request. For example, if the routing request comes from the first terminal 10, the communication device 30 is able to identify the second terminal 20 using the identifier ID_{T20}. Such an identifier may not only used to identify the second terminal but it may also be used as a network address or as data to retrieve the appropriate network address to contact this second terminal, namely to find the appropriate route in order to reach it.

Still in the context of processing the routing request and thanks to the identifier ID_{T20}, the communication device 30 may sent a signal to the second terminal, for example a call signal which, for example, may trigger the ringing of the second terminal 20. Any other action may be triggered by such a signal at the second terminal. For example, the second terminal may display a message to prompt the end-user whether the communication link of the ongoing communication has to be switched on this second terminal, and/or the second terminal may send data to the communication device 30 in response to the signal received from this communication device. Among the data that may be sent by the second terminal to the communication device 30, authentication data may be sent, as will be explained in further detail hereinafter.

Finally, in case of successful processing of the routing request 5 by the communication device 30, the communication link 15 of the ongoing communication exchange established with the communication device 30 is switched from the first terminal 10 to the second terminal 20. The verification of the success or failure of the aforementioned processing is carried out by a checking unit 32, schematically shown above the processing unit 31 in Fig. 1. According to one embodiment, the checking unit 32 may determine that the processing is successful if the second terminal 20 responds to the signal received from the communication device 30. For example, if the second terminal 20 answers the incoming call signal, then the checking unit 32 may observe that the new communication link between the communication device 30 and the second terminal 20 is well established. Still preferably, switching the communication link 15 may be carried out in case of complete and successful processing of the routing request. On the other hand, if the second terminal 20 fails to respond to the incoming call signal, then processing of the routing request 5 may be defined as unsuccessful.

Switching the communication link 15 at the communication device 30 from the first terminal 10 to the second terminal 20 is carried out by the communication device 30, as schematically shown in Fig. 1 by the electrical switch 33. Preferably, once switched, the initial communication link 15 between the communication device 30 and the first terminal 10 may be ended. Advantageously, in such a case the first terminal 10 might be ready to receive or make further calls again.

Another way for transferring an ongoing communication, such as a current conversation with a phone, from one terminal to the other terminal is to initiate the switching of the communication link 15 using the terminal which is free. For example, if the ongoing communication is initially established between the first terminal 10 and the communication device 30, it should be opportune to use the second terminal 20 in order to initiate the switching of the communication link 15 of the ongoing communication.

To this end, the second terminal 20 requests the first terminal 10 to send it information 26 comprising e.g. data allowing to identify the ongoing communication. Such data may refer to at least one of the first terminal identifier ID_{T10}, the identifier ID_{L15} of the communication link 15 and the identifier ID_{D30} of the communication device 30. Once the requested data has been received by the second terminal 20 through the short-range connection 25, the second terminal 20 may automatically generate and send a routing request 5 to the communication device 30 thanks to information 26 received from the first terminal 10. Once the communication device 30 receives the routing request 5 from the second terminal 20, it can process the routing request and, in case of successful processing, switching the communication link 15, initially established with the first terminal 10, to the second terminal 20.

Such a scheme is applicable regardless the type of terminal used for the first and second terminals 10, 20. For example, if the first terminal 10 is a desk phone as shown in Fig. 1, the second terminal 20, namely the mobile phone, may be used to initiate the transfer of the conversation in progress instead of using the desk phone currently in use. Advantageously, since the desk phone is not used for initiating the handover of the ongoing conversation, the operation will be carried out without any disturbance on the conversation in progress. The same is applicable if the first terminal 10 is a mobile phone and the second terminal 20 is a desk phone or a mobile phone.

### Additional general considerations

The communication device 30 can be regarded as a remote communication device with respect to the end-user area 1. Accordingly, the communication device 30 should not be confused with the base of a cordless phone (DECT).

According to another situation, on may consider the case where the end-user is outside the end-user area 1, e.g. outside his office, while being on the phone for talking with an interlocutor using a mobile phone. Still in conversation on the phone, the end-user arrives at his office and may want to handover the ongoing conversation from his mobile phone (first terminal) to his desk phone (second terminal) within his office (end-user area). To this end, the same method as that disclosed above may be applied to seamlessly handover an ongoing conversation from a mobile phone to a desk phone.

As shown in the Figures, the communication link 15 is a link which extends from a local area, namely the end-user area 1, to a remote area, i.e. outside the end-user area. Accordingly, the communication link 15 goes across the border of the end-user area 1.

Still referring to the communication link 15 shown in the Figures, it should be noted that two reference numerals 15 could designate two links, in particular the link between the first terminal 10 and the communication device 30, and the link between the second terminal 20 and the same communication device 30. In fact, it should be noted that these two links both designate the same object, namely the communication link 15 *of the ongoing* communication with the communication device, or in other words the ongoing communication link with the communication device 30. This ongoing communication link 15 may be regarded as the communication link which is active or currently in progress. According to the position of the switch 33 depicted in Fig. 1, the active communication link 15 is that which links the communication device 30 to the first terminal 10 since the switch 33 is opened on the side of the connection towards the second terminal 20. Accordingly, the Fig. 1 shows the initial state, namely the state of the communication architecture before switching the communication link 15 from the first terminal 10 to the second terminal 20.

As part of processing the routing request, it should be noted that the communication device 30 may also receive and process a signal from the second terminal 20. Such a signal might not only be a response sent to the communication device, as already disclosed above, but it could be a signal initiated by the second terminal 20 before it receives any signal from the communication device 30. Indeed, in some cases, the second terminal 20 could be able to contact the communication device 30 thanks to appropriate information received from the first terminal 10 through the short-range connection 25. Generally speaking, it should be noted that a signal may be sent between the communication device 30 and the second terminal 20. Furthermore, such a signal may be used to trigger an action and/or to carry data.

As shown from the foregoing, the present method, including any of its embodiments, may be regarded as a protocol followed by at least the first and second terminals 10, 20 in order to be able to switch the communication link 15 of an ongoing communication with the communication device 30, from the first terminal 10 to the second terminal 20.

### Other examples of communication architecture

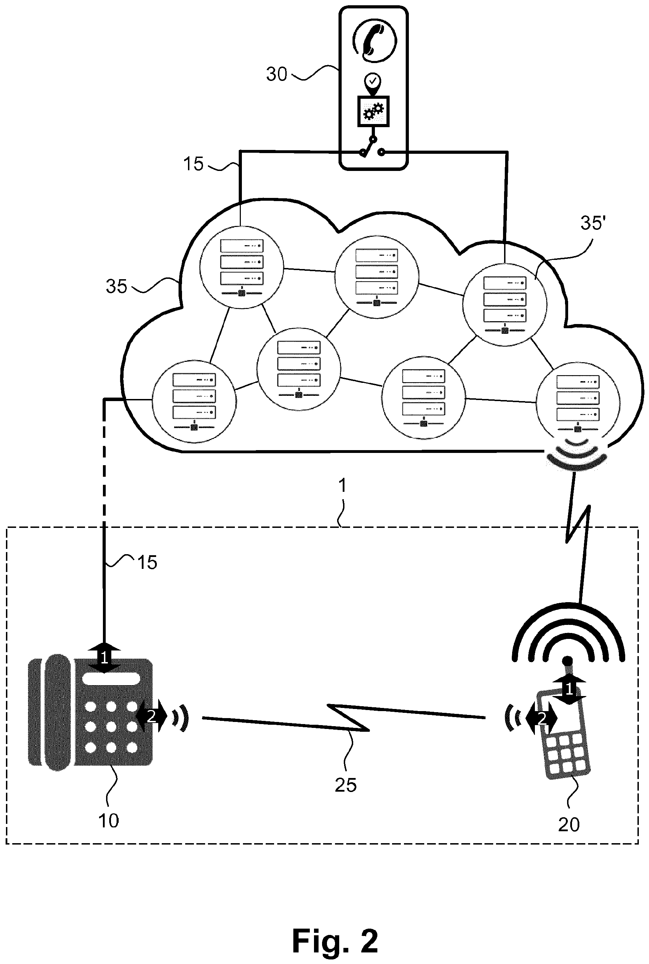

Fig. 2 depicts a first variant of the communication architecture of Fig. 1. In the example of Fig. 2, the communication architecture could be compared to communications exchanged between terminals connected to a wide communication network 35 such as the Internet. To this end, applications such as Skype, WhatsApp, Viber or any application e.g. based on the VoIP technology may be used by any terminal of the network 35.

According to the architecture of Fig. 2, the communication device 30 should be regarded as being the terminal of the interlocutor with whom the end-user has an ongoing conversation using the first terminal 10. Indeed, in such a case, the ongoing communication between the first terminal 10 and the communication device 30 is relayed by a plurality of routers 35' which constitute the communication network 35 which has been depicted as a cloud in Fig. 2.

Within such a communication network 35, the routers 35' are mainly designed to route data packets of an ongoing communication from an emitter (e.g. the first terminal 10) to a receiver (e.g. the communication device 30). For this reason, the device which is able to switch, from the first terminal 10 to the second terminal 20, the communication link 15 initially established between the first terminal 10 and the communication device 30, is the communication device 30 itself. In any case (i.e. Fig.1 or Fig. 2), one can note that the device which carries out switching the communication link 15 remains the communication device 30. The only difference between Fig. 1 and Fig. 2 lies in the fact that in one case (Fig. 1) the communication device 30 should be regarded as a server or a central of a telecommunication operator, and in the other case (Fig. 2) the communication device 30 should rather be regarded as a terminal, e.g. a third terminal.

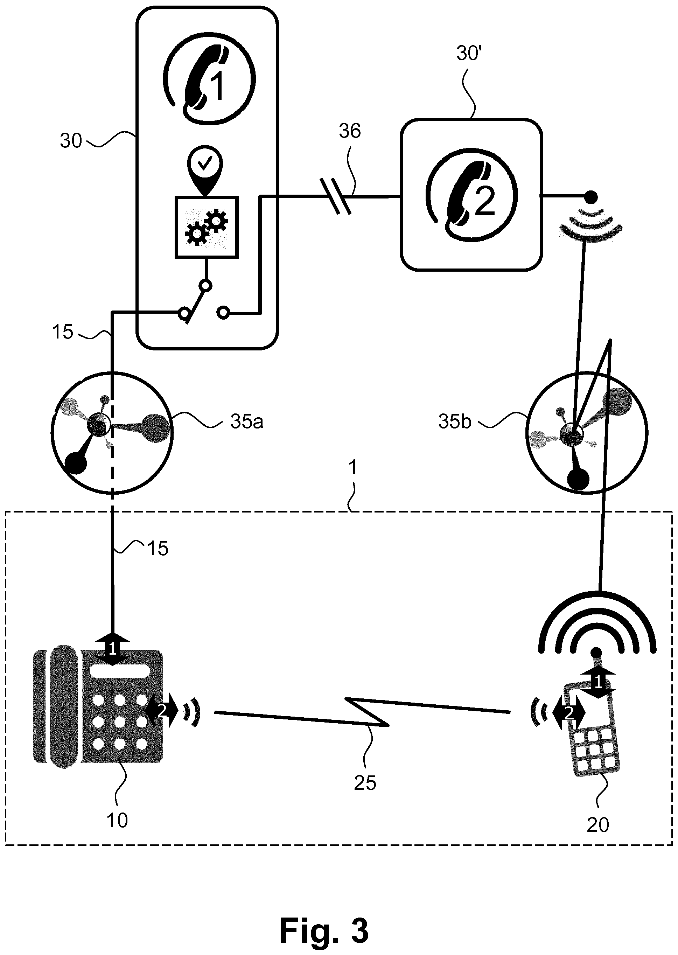

Another variant of the communication architecture of Fig. 1 is depicted in Fig. 3. In this case, each of the first and second terminals 10, 20 is linked to a communication device 30, 30'. For example, the first communication device 10 may be linked to the communication device 30 through a first network 35a, and the second terminal 20 may be linked to a second communication device 30' through a second network 35b. Typically, the first communication network 35a may belong or be used by the telecommunication operator or the service provider selected by the first terminal 10, and the second communication network 35b may belong or be used by the telecommunication operator or the service provider selected by the second terminal 20. Although each of the communication device 30, 30' has been schematically depicted outside the first and second communication network 35a, 35b, it should be noted that the communication device 30 may not only be associated to the first communication network 35a, but is may also be part of this first communication network 35a. The same is applicable regarding the second communication device 30' and second communication network 35b.

Even if the communication devices 30, 30' are connected to or are part of distinct communication networks 30a, 30b, the fact remains that there is always a way to establish a connection between these two communication devices 30, 30'. Such a connection can be defined as an interconnection 36 between the communication device 30 and the second communication 30'. In order to highlight the distinction or the separation between the first and second communication networks 30a, 30b to which the communication devices 30, 30' are respectively linked the interconnection 36 has been schematically depicted by a broken line.

According to the communication architecture shown in Fig. 3, switching the communication link 15 established with the communication device 30, from the first terminal 10 to the second terminal 20, is carried out via the second communication device 30'. The communication device 30 with which the communication link 15 has been initially established with the first terminal for the ongoing communication, is preferably still remains in charge of switching the communication link 15. From the communication device 30, the interconnection 36 can be regarded as a bridge to pass the ongoing communication through the second communication network 35b until reaching the second terminal 20. In this regard, if any data, such as a routing request 5 for example, should be transmitted from the second terminal 20 to the communication device 30, such data would preferably transit via the second communication device 30' and the interconnection 36.

### Security stages

Whatever the embodiment and the communication architecture used by the present solution, it should be noted that several mechanisms may be added to increase the security of data exchanges involved in such a solution.

First of all, it should be noted that the most critical environment is located outside the end-user area 1, in particular because, outside the end-user area 1, the communication link 15 pass through a wide open area, e.g. via several unknown routers (as shown in Fig. 2), while using connections or interconnections which are probably not protected against piracy. In contrast, the short-range connection 25 is fully located within a private area (end-user area 1), it is established between only two terminals 10, 20 which are well known to the end-user, it does not transit through another device since it is a direct connection between the first and second terminals 10, 20, and finally it is fully separate from any other connection, especially separate from the communication link 15.

To overcome any potential inconvenience or attack that may be caused by malicious persons, several countermeasures may be taken as additional stages to increase the security of the data exchanges between the different entities of any embodiment of the present solution. Any countermeasure may be combined with another countermeasure, if applicable.

One of these countermeasures could be to add an authentication stage. To this end, the communication device 30 may receive authentication data 8, 8' from each of the first and second terminals 10, 20. In Fig. 1, the aforementioned authentication data 8 provided by each of the terminals 10, 20 is schematically shown by a fingerprint sent towards the communication device 30. In this regard, the processing of the routing request 5 by the processing unit 31 may be followed by a step for checking whether there is a match between the authentication data 8, 8' provided by each of the first and second terminals 10, 20. Such a step may be performed by the checking unit 32. In case of negative outcome, the processing of the routing request 5 may be defined as unsuccessful. In contrast, if the authentication data 8 received from the first terminal 10 matches the authentication data 8' received from the second terminal 20, the communication device 30 may conclude that the processing of routing request is a success.

Initially, the authentication data 8, 8' provided by each of the terminals 10, 20 are e.g. the same, i.e. they are identical. Since the end-user area 1 may be considered as being a trust area, it would be appropriate to transmit e.g. the authentication data 8 generated by one of the terminal to the other terminal using the short-range connection 25. This may be achieved, for example by including the authentication data 8 into information 26 exchanged between the two terminals 10, 20, e.g. from the first terminal 10 to the second terminal 20. Once the authentication data has been transmitted from one terminal to the other, both terminals 10, 20 have the same authentication data. However, to distinguish the authentication data sent by each of the terminals 10, 20 to the communication device 30, the authentication data sent by the first terminal 10 has been identified in the present disclosure by the reference numeral 8 and the authentication data sent by the second terminal 20 has been identified by the reference numeral 8', as also shown in Fig. 1. Furthermore, it should be noted that there is no real requirement that the authentication data 8 and 8' are identical, as will explained in some further embodiments.

Preferably, one of the authentication data 8, 8' is sent to the communication device 30 within the routing request 5. For example, if the first terminal 10 is initially on communication with the communication device 30, it may generate authentication data 8 and include this authentication data 8 in the routing request 5 sent to the communication device 30.

On the other hand, authentication data 8' is sent to the communication device 30 by the second terminal 20, either on its own initiative, or in response to a signal or a message received from the communication device 30. Indeed, according to one case, the information 26 received from the first terminal 10 may comprise data to identify the communication device 30. Data to contact or reach the communication device 30 may be added to or derived from the data to identify the communication device 30. Accordingly, the second terminal 20 may be able to know how to send authentication data 8' to the communication device 30. According to another case, the authentication data 8' may simply be sent to the communication device 30 in response to a request received from this communication device 30. For example, the communication device may send a request to the second terminal 20 for receiving authentication data 8' once it has received the routing request 5 from the first terminal 10. Indeed, such routing request 5 may include data to identify the second terminal 20 and similarly as explained above, such identification data may allow to reach the second terminal 20.

If there is a match between the authentication data 8 and 8' received by the communication device 30, the latter may conclude that the routing request 5 is genuine and processing of the routing request may be defined as successful.

Another countermeasure may aim to encrypt at least of part data exchanged within any embodiment of the communication architecture. For example, data comprised in the routing request 5, or at least some of these data, may be encrypted. For instance, authentication data 8 and data to identify the second terminal 20 may be encrypted by the first terminal 10 before the routing request 5 is sent to the communication device 30. In this case, there is no need to encrypt the authentication data 8' sent by the second terminal 20 to the communication device 30. The communication 30 may have the appropriate key to properly decrypt data of the routing request 5. Such a key may be the same as that used by the first terminal 10 for the encryption according to a symmetric encryption scheme. Alternatively, a public key cryptography, namely an asymmetrical encryption scheme, may be also applied to protect data of the routing request 5. Key exchanges may be carried out once during an initialization stage by any secure way. Alternatively, key exchanges may be executed more than one time. Diffie-Hellman process may be also used to perform the exchange of keys. Since Diffie-Hellman process is well-known for the person skilled in the art, such a process will not be explained in the present disclosure.

As already mentioned in connection with Fig. 3, if any data, such as a routing request 5 or authentication data 8', should be transmitted from the second terminal 20 to the communication device 30, such data would preferably transit via the second communication device 30' and the interconnection 36.

The use of a cryptography process to protect data is not limited to exchanges between the terminal 10, 20 and the communication device 30, but it may be also applied to the exchanges within the end-user area 1, especially through the short-range connection 25.

Instead of encrypting information 26 exchanged between the two terminals 10, 20 within the end-user area 1, another efficient countermeasure may be to use the NFC technology to exchange information 26 between these two terminals. Indeed, NFC involves placing the first and second terminals in a close proximity with each other, typically no more than 10 centimeters, in order to allow the data exchange. Thanks to such a very short-range connection, the risk of data piracy is close to zero. Still advantageously, it is sufficient that the two terminals 10, 20 are NFC compliant to be ready for exchanging any data using such a technology. No pre-configuration stage or step is required.

### Additional embodiments

Regarding authentication data 8 and 8', it should be noted that there no requirement that these two data be identical. Indeed, at least a part of these two authentication data 8, 8' may be identical. According to another embodiment, the authentication data 8 and 8' may be fully different if at least one of them allows to retrieve the other. For example, from authentication data 8 a specific algorithm may be used to derive authentication data 8' in a way that authentication data 8' is distinct from authentication data 8. By reversing such a specific algorithm, the communication device 30 may retrieve authentication data 8 from authentication data 8' received from the second terminal 20. Then, the communication device 30 may compare the aforementioned retrieved authentication data 8 with authentication data 8 provided by the first terminal 10 in order to determine if the processing of the routing request 5 has to be defined as successful or not.

According to one embodiment, authentication data 8, 8' is derived from a shared hash function, applied both by the first and second terminals 10, 20 on at least a part of information 26 exchanged between the first and the second terminals 10, 20. For example, authentication data 8, 8' may be obtained by applying a hash function on an identifier, e.g. on the identifier ID_{L15} of the communication link 15 used for the ongoing communication. In this case, at least this identifier ID_{L15} is part of information 26 transmitted from the first terminal 10 to the second terminal 20. The hash function may be shared by the two terminals, for example during a prior initialization stage.

According to one embodiment, authentication data 8, 8' may be a random number. Still preferably, authentication data 8, 8' is based on a nonce, for example a random number that is used once. Authentication data may comprise a nonce or may at least be derived from a nonce.

According to another embodiment, authentication data 8, 8' involves a first secret belonging to the first terminal 10 and a second secret belonging to the second terminal 20. In such a case, Diffie-Hellman process might be used to obtain the same authentication data 8, 8' on both sides of the short-range connection 25 (i.e. at the first and second terminals 10, 20), without however transmitting such an authentication data from one terminal to the other.

According to one embodiment, exchanging information 26 between the first and second terminals 10, 20 may be performed once one of the first and second terminals 10, 20 detects the other terminal 10, 20 through the short-range connection 25. The detection of one terminal by the other terminal may be performed automatically, as it is already the case e.g. for devices which are WiFi or Bluetooth compliant.

Preferably, exchanging the aforementioned information 26 is further performed after an execution order has been received by at least one of the first and second terminals 10, 20. Such an execution order may be regarded as a instruction or a command urging the appropriate terminal to handover the ongoing communication to the other terminal by switching the communication link 15 of the aforementioned ongoing communication. The execution order may come from the end-user, for example if the second terminal 20 asks the end-user if he wants to handover the ongoing communication towards the second terminal. Alternatively, the execution order may be automatically generated and sent to the appropriate terminal as soon as both terminals are connected to each other via the short-range connection 25. In such a case, information 26 may be automatically exchanged between the two terminals 10, 20.

As already suggested, at least one of the first and second terminals 10, 20 may be a handheld terminal (mobile terminal), such as a mobile phone for example. Preferably, one of the two terminals 10, 20 is a desk phone and the other is a mobile phone.

### Pairing stage

According to one embodiment, the method described so far may further comprises a pairing stage which could preferably be carried out at the beginning of the process, for example once or from time to time, typically before exchanging information 26 (via the short-range connection 25) between the first and the second terminals 10, 20. Thanks to pairing stage, both paired terminals 10, 20 advantageously trust themselves and may automatically recognize each other.

Such a pairing stage also aims to establish prior mutual recognition of the terminals 10, 20, in order to facilitate and/or speed up data exchanges between these two terminals, at least in some cases. For example, at least a part of information 26 exchanged between the first and the second terminal 10, 20, or at least a part of authentication data 8, 8' may be previously shared and stored by each of these first and second terminals during an initial pairing stage.

Information exchanged in advance during the pairing process may relate to any identifier (e.g. ID_{T10}, ID_{T20}, IP address of any terminal or communication device), any data to be used for authentication purposes (e.g. secret, random number, protocol, mathematical or logical function), any data to be used for cryptographic purposes (e.g. key, algorithm) or any data which could be shared in advance between the two terminals 10, 26 in view to achieve switching the communication link 15. In particular, the pairing process may include the exchange of any data that could be shared during any of initialization or configuration stages, such as those mentioned in the present description.

Furthermore, any data exchanged during such a pairing process may be stored in each of the first and second terminals 10, 20, for example within a secure memory.

Renewing at least a part of these data may be performed by triggering a new pairing process between these terminals 10, 20. Such a renewal may be partial or total and may be triggered at any time, for example on request of the end-user or on request of one of the first and second terminals 10, 20. In the latter case, the renewal may be scheduled in advance or may be performed at regular time intervals.

### System for implementing the method

The present solution also comprises a communication system for implementing the above-described method according to any of its embodiments. As shown in any of the Figures 1 to 3, this communication system comprises the first terminal 10 and the second terminal 20. This system is configured to allow switching the communication link 15 of an ongoing communication established with the communication device 30, from the first terminal 10 to the second terminal 20.

To this end, each of the first and second terminals 10, 20 comprises a first communication interface 11, 21 configured to be connected to the communication link 15, and a second communication interface 21, 22 configured to link the first and second terminals 10, 20 to each other through the short range connection 25 separate from the communication link 15.

The first and second terminals 10, 20 are further configured to exchange, through their second communication interface 21, 22, information 26 allowing to at least to identify the aforementioned ongoing communication. As already mentioned, the communication in progress, between the first terminal 10 and the communication device 30, could be identified for example thanks to at least one of the identifier ID_{T10} of the first terminal 10, the identifier ID_{L15} of the communication link 15 used for the ongoing communication and the identifier ID_{D30} of the communication device 30. This also means that a combination of any of these identifiers could be used to identify the ongoing communication. Preferably, the identification of the ongoing communication will be carried out, subsequently, by the communication device 30. In this regard, at least one of the first and second terminals 10, 20 is further configured to send, through the first communication interface, a routing request for switching the communication link 15, more specifically, a routing request to be processed by the communication device 30 so that the communication link can be switched in case of successful processing.

In one embodiment, the present communication system may further comprise the communication device 30, in particular to carry out the processing of the routing request 5 and switching the communication link 15 of the ongoing communication established with the communication device, from the first terminal 10 to the second terminal 20.

Furthermore, it should be noted that any feature mentioned in connection with the method could be the subject of a feature of the aforementioned communication system, in particular of any of the entities 10, 20, 30 of this communication system. For the sake of simplicity, such features are merely no longer discussed in the context of the present communication system.

### Terminal to be used for switching a communication link

The present solution further comprises a terminal 10, more specifically a first terminal 10, configured to be used for switching a communication link 15 of an ongoing communication established with a communication device 30, from this terminal 10, i.e. this first terminal 10, to a second terminal 20. Although the terminal 10 is not specifically configured to be in charge of switching the communication link 15, it should be regarded as being configured to allow such a switching when it is integrated within a communication system and/or a method as those disclosed in the present description.

According to the present solution, the terminal 10 (i.e. first terminal 10) comprises a first communication interface 11 configured to be connected to the communication link 15, and a second communication interface 12, configured to link the aforementioned terminal 10 to the second terminal 20 through the short-range connection 25 separate from the communication link 15. Furthermore, the aforementioned terminal 10 is also configured to exchange, through the second communication interface 12, information 26 allowing to identify the ongoing communication. The aforementioned terminal 10 is also configured to send, through the first communication interface 11, a routing request 5 for switching the communication link 15. In addition, the terminal 10 may also comprise well known components such as, processing unit 31, checking unit 32, authentication unit, storage unit or any other unit or element to carry out any task mentioned in the above-described method.

For the same reasons as those mentioned above regarding the communication system, it should be noted that any feature mentioned in connection with the method could be the subject of a feature of the aforementioned terminal 10.

### Final considerations

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. The Detailed Description, therefore, is not to be taken in a limiting sense, and the scope of various embodiments is defined only by the appended claims, along with the full range of equivalents to which such claims are entitled.

## Claims

1. A method for switching a communication link (15) of an ongoing communication with a communication device (30), from a first terminal (10) to a second terminal (20), comprising:
- exchanging, between the first terminal (10) and the second terminal (20), information (26) via a short-range connection (25) separate from said communication link (15), said information (26) allowing to identify said ongoing communication,
- sending a routing request (5) from at least one of said first and second terminals (10, 20) to the communication device (30), said routing request (5) comprising data to identify the second terminal (20) or data to identify said ongoing communication, depending on whether the routing request (5) is sent respectively by the first terminal (10) or by the second terminal (20),
- processing said routing request (5) at said communication device (30), and
- in case of successful processing, switching said communication link (15) with said communication device (30) from the first terminal (10) to the second terminal (20).

2. The method of claim 1, wherein said communication device (30) receives authentication data (8, 8') from each of said first and second terminals (10, 20), and the processing of said routing request (5) further comprises:
- checking whether there is a match between the authentication data (8, 8') provided by each of said first and second terminals (10, 20), and, in case of negative outcome, defining the processing of said routing request (5) as unsuccessful.

3. The method of claim 1 or 2, wherein said short-range connection (25) is a wireless connection.

4. The method of any of preceding claims, wherein exchanging said information (26) between said first and second terminals (10, 20) is performed once one of said first and second terminals (10, 20) detects the other terminal (20, 10) through said short-range connection (25).

5. The method of claim 4, wherein exchanging said information (26) is further performed after an execution order has been received by at least one of said first and second terminals (10, 20).

6. The method of any of claims 2 to 5, wherein said authentication data (8, 8') is derived from a shared hash function applied both by the first and second terminals (10, 20) on at least a part of said information (26) transmitted from the first terminal (10) to the second terminal (20).

7. The method of any of claims 2 to 5, wherein said information (26), transmitted from the first terminal (10) to the second terminal (20), further comprises said authentication data (8, 8').

8. The method of claim 7, wherein said authentication data (8, 8') is based on a nonce.

9. The method of claims 7 or 8, wherein said authentication data (8, 8') involves a first secret belonging to the first terminal (10) and a second secret belonging to the second terminal (20).

10. The method of any of preceding claims, wherein said first terminal (10) is linked to the communication device (30) through a first network (35a), said second terminal (20) is linked to a second communication device (30') through a second network (35b), and the switching of said communication link (15) from the first terminal (10) to the second terminal (20) is carried out via said second communication device (30').

11. The method of any of preceding claims, wherein at least one of the first and second terminals (10, 20) is a handheld terminal.

12. The method of any of preceding claims, wherein at least a part of said information (26), transmitted from the first terminal (10) to the second terminal (20), or at least a part of said authentication data (8, 8') has been previously shared and stored by said first and second terminals (10, 20) during an initial pairing stage.

13. The method of any of preceding claims, wherein said routing request (5) is sent by the first terminal (10) to said communication device (30), and the processing of said routing request (5) further comprises:
- using said data to identify the second terminal (20) in order to send a call signal to the second terminal (20) and,
- in the case where said second terminal (20) fails to respond to said call signal, then processing of said routing request (5) is defined as unsuccessful.

14. A communication system, comprising a first terminal (10) and a second terminal (20), configured to allow switching a communication link (15) of an ongoing communication with a communication device (30), from said first terminal (10) to said second terminal (20), **characterized in that**:
- each of said first and second terminals (10, 20) comprises a first communication interface (11, 21), configured to be connected to said communication link (15), and a second communication interface (12, 22), configured to link the first and second terminals (10, 20) to each other through a short-range connection (25) separate from said communication link (15),
- said first and second terminals (10, 20) being further configured to exchange, through said second communication interface (11, 21; 12, 22), information (26) allowing to identify said ongoing communication, and
- at least one of said first and second terminals (10, 20) being further configured to send, through said first communication interface (11, 21), a routing request (5) for switching said communication link (15).

15. A terminal (10) configured to be used for switching a communication link (15) of an ongoing communication with a communication device (30), from said terminal (10) to a second terminal (20), **characterized in that** it comprises a first communication interface (11), configured to be connected to said communication link (15), and a second communication interface (12), configured to link said terminal (10) to the second terminals (20) through a short-range connection (25) separate from said communication link (15),
said terminal (10) being further configured to exchange, through said second communication interface (12), information (26) allowing to identify said ongoing communication, and to send, through said first communication interface (11), a routing request (5) for switching said communication link (15).
